# DEMANDE DE BREVET EUROPEEN

(11) **EP 0 926 638 A1**
(43) Date de publication de la demande: **30.06.1999**
(21) Numéro de dépôt: 98403181.5
(22) Date de dépôt: 16.12.1998
(51) Int. Cl.: G07F 7/10, G07C 9/00

(54) **Système d'échange de données entre un terminal de paiement portable et une base fixe**

(30) Priorité: 24.12.1997 FR 9716473
(71) Demandeur: SCHLUMBERGER Systèmes, 92120 Montrouge (FR)
(72) Inventeur: Mabrouki, Benazzouz, 92000 Nanterre (FR)
(74) Mandataire: Lemoyne, Didier

(57) **Abrégé**

Système d'échange de données entre un terminal (10) de paiement portable et une base (20) fixe reliée à un centre (30) de paiement, ledit terminal et ladite base (20) comportant, chacun, une unité centrale (110, 210) et un module (120, 220) d'émission-réception radio, chaque unité centrale étant apte à composer, respectivement lire, des messages binaires émis, respectivement reçus, sous forme d'onde radio par ledit module d'émission-réception.

Selon l'invention, ledit terminal (10) de paiement portable ou la base (20) fixe comporte des moyens (128) de stockage desdits messages binaires et des moyens (HALT) de mise en mode-sommeil de l'unité centrale (110), le module d'émission-réception radio n'étant mis en oeuvre que lorsque ladite unité centrale est en mode-sommeil.

Application aux transactions électroniques.

## Description

La présente invention concerne un système d'échange de données entre un terminal de paiement portable et une base fixe reliée à un centre de paiement.

L'invention trouve une application particulièrement avantageuse dans le domaine des transactions électroniques effectuées au moyen d'une carte à mémoire électronique en coopération avec un terminal de paiement portable.

Actuellement, un grand nombre de transactions, notamment chez les commerçants et dans les restaurants, sont réalisées sous forme électronique à l'aide d'une carte à mémoire, dite carte bancaire, comportant un microprocesseur constituée par une pastille semiconductrice ou puce. Ces cartes à mémoire sont introduites dans le lecteur d'un terminal de paiement portable apte à échanger des données transactionnelles avec une base fixe, laquelle est reliée à un centre de paiement généralement par le réseau téléphonique commuté. Ce centre de paiement gère les transactions qui lui sont adressées et peut donner ou refuser les autorisations qui lui sont demandées.

On connait des systèmes d'échange de données entre terminaux de paiement portables et bases fixes dans lesquels un terminal et la base associée comportent, chacun, une unité centrale et un module d'émission-réception radio. L'unité centrale du terminal est apte à composer des messages de type binaire à destination de la base, lesdits messages comportant, par exemple, le montant de la transaction, l'identification du client et l'identification du commerçant. Ces messages sont transmis à la base par voie hertzienne par le module d'émission-réception radio du terminal. En retour, la base est apte à émettre en direction du terminal des messages binaires d'autorisation ou d'annulation de transaction, par exemple, au moyen de son module d'émission-réception radio.

Ces systèmes d'échange de données connus fonctionnent de la façon suivante, étant entendu que le terminal et la base jouent des rôles parfaitement symétriques. En émission, l'unité centrale et le module d'émission-réception radio de la partie émettrice sont simultanément en fonctionnement en ce sens que les données reçues de l'unité centrale sont émises vers la partie réceptrice par le module d'émission-réception au fur et à mesure de leur arrivée. Les commutations successives de l'unité centrale lors de la composition des messages binaires produisent des perturbations électromagnétiques au niveau du module d'émission-réception, notamment sur l'antenne, lesquelles induisent du bruit dans la bande d'émission. Dans ce cas cependant, ces perturbations n'ont qu'une faible incidence sur le signal d'émission dans la mesure où celui-ci est amplifié à un niveau relativement élevé.

Par contre, en réception, le fonctionnement de l'unité centrale de la partie réceptrice pour lire les messages binaires au fur et à mesure qu'ils sont reçus par le module d'émission-réception radio induit des perturbations relativement plus grandes car le signal reçu peut avoir un niveau faible du fait notamment de la distance importante séparant le terminal de la base. Le bruit engendré par l'unité centrale rend alors pratiquement inexploitable le signal provenant de la partie émettrice et limite la portée du système.

Aussi, le problème technique à résoudre par l'objet de la présente invention est de proposer un système d'échange de données entre un terminal de paiement portable et une base fixe reliée à un centre de paiement, ledit terminal et ladite base comportant, chacun, une unité centrale et un module d'émission-réception radio, chaque unité centrale étant apte à composer, respectivement lire, des messages binaires émis, respectivement reçus, sous forme d'onde radio par ledit module d'émission-réception, système qui permettrait d'éviter toute interférence de fonctionnement entre l'unité centrale et le module d'émission-réception de manière à garantir un rapport signal à bruit maximum du signal émis ou reçu par ledit module.

La solution au problème technique posé consiste, selon la présente invention, en ce qu'au moins le terminal de paiement portable ou la base fixe comporte des moyens de stockage desdits messages binaires et des moyens de mise en mode-sommeil de l'unité centrale, le module d'émission-réception radio n'étant mis en oeuvre que lorsque ladite unité centrale est en mode-sommeil.

Ainsi, les fonctionnements de l'unité centrale et du module d'émission-réception étant successifs et non plus simultanés, ledit module ne peut plus être le siège de perturbations induites par l'unité centrale. Le rapport signal à bruit du module d'émission-réception se trouve nettement augmenté surtout en réception avec l'avantage de permettre au système conforme à l'invention de fonctionner sous une distance plus grande entre le terminal et la base.

Selon un mode de réalisation avantageux du système d'échange de données selon l'invention, lesdits messages binaires sont stockés dans lesdits moyens de stockage à une vitesse de transmission supérieure à la vitesse de transmission de la liaison radio entre le terminal de paiement portable et la base fixe. Cette disposition permet de minimiser l'allongement de la durée de transmission entre les deux unités centrales, dû au fait que le fonctionnement des unités centrales et des modules d'émission-réception n'est plus simultané mais successif.

La description qui va suivre en regards des dessins annexés, donnés à titre d'exemples non limitatifs, fera bien comprendre en quoi consiste l'invention et comment elle peut être réalisée.

La figure 1 est une représentation schématique d'un système d'échange de données conforme à l'invention.

La figure 2a est un schéma d'une unité centrale du système de la figure 1.

La figure 2b est un schéma du module d'émission-réception radio destiné à coopérer avec l'unité centrale de la figure 2a.

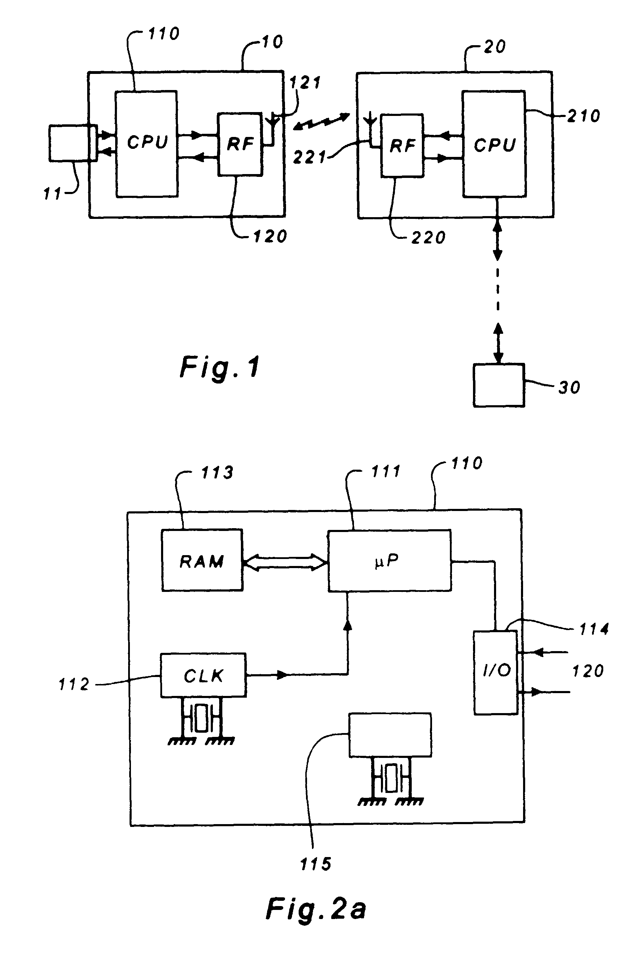

Sur la figure 1 est représenté de façon schématique un système d'échange de données entre un terminal 10 de paiement portable, destiné à recevoir une carte 11 à mémoire électronique, et une base fixe 20 reliée à un centre 30 de paiement par liaison téléphonique. De manière classique, le terminal 10 est équipé d'un lecteur de cartes, non représenté, afin de pouvoir lire et transmettre au centre de paiement des données d'identification du titulaire de la carte 11. Le terminal 10 comporte également un clavier, non représenté, grâce auquel le commerçant, détenteur dudit terminal, peut introduire des données relatives à la transaction effectuée, notamment le montant. Toutes ces données sont transmises sous forme de messages binaires par communication radio à la base fixe 20 qui sert en quelque sorte de relais vers le centre 30 de paiement, destinataire final des données transactionnelles recueillies par le terminal 10. En retour, et par la même voie, ledit centre de paiement envoie, par exemple, un message d'autorisation de transaction à la base fixe 20 qui le retransmet au terminal 10 toujours par voie radio.

A cet effet, le terminal 10 de paiement portable comporte une unité centrale 110 chargée de composer les messages binaires à destination de la base fixe 20 et, inversement, de lire ceux qu'elle reçoit de ladite base. L'émission et la réception de ces messages binaires sont assurées par un module 120 d'émission-réception radio muni d'une antenne 121.

De manière tout à fait symétrique, la base fixe 20 comprend une unité centrale 210 et un module 220 d'émission-réception radio muni d'une antenne 221.

On comprend dans ces conditions qu'aussi bien pour le terminal 10 que pour la base 20, l'émission ou la réception des messages binaires au niveau des modules 120, 220 puisse étre perturbée par les commutations dues à l'élaboration ou la lecture des messages binaires par l'unité centrale 110, 210 respective, ces perturbations, particulièrement néfastes en réception des messages, conduisant à une limitation de la portée du système, le terminal 10 portable ne pouvant être trop éloigné de la base 20.

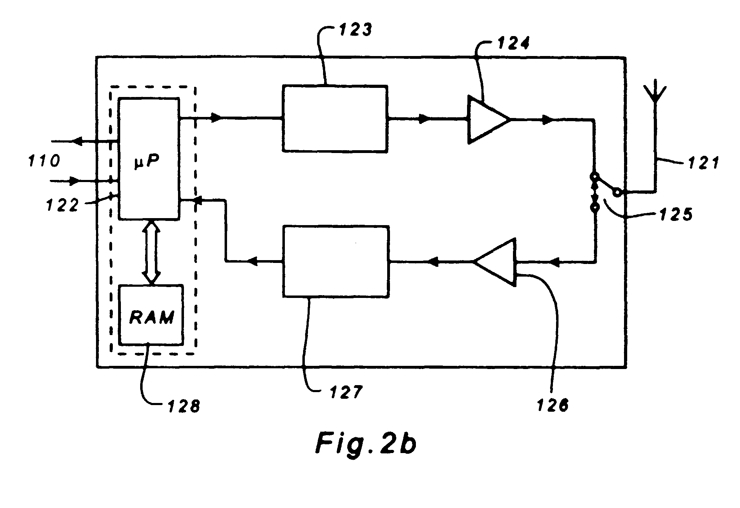

Sur les figures 2a et 2b, on a représenté les schémas de l'unité centrale 110 et du module 120 radio du terminal 10, respectivement. Les schémas des organes équivalents de la base 20 sont identiques et les dispositions qui vont maintenant être décrites en référence au terminal 10 peuvent tout aussi bien s'appliquer à la base 20.

La figure 2a montre que l'unité centrale 110 est essentiellement constituée d'un microprocesseur 111 cadencé par une horloge 112 et échangeant des données avec une mémoire 113, ces données pouvant provenir de la carte électronique 11 montrée à la figure 1 ou du clavier du terminal 10 de paiement portable. Les messages binaires composés par le microprocesseur 111 ou reçus du module 120 d'émission-réception radio transitent par un périphérique 114 de communication radio, lequel est connecté au module 120.

Comme le montre la figure 2b, ledit module 120 d'émission-réception radio comporte un microprocesseur 122 relié en émission à un ensemble 123 de modulation comprenant un modulateur, un filtre et un oscillateur contrôlé en tension, suivi d'un amplificateur 124 relié à l'antenne 121 par un commutateur 125 émission/réception. En réception, le signal reçu de l'antenne 121 est amplifié par un amplificateur 126 puis démodulé par un ensemble 127 de démodulation comprenant un mélangeur, un amplificateur de fréquence intermédiaire et un démodulateur.

Selon un fonctionnement classique, en émission par exemple, les messages binaires sont émis par le module 120 radio au fur et à mesure qu'ils sont élaborés par le microprocesseur 111 de l'unité centrale 110. Le fonctionnement simultané du microprocesseur 111 et du module 120 a pour conséquence que par ses commutations le microprocesseur 111 crée du bruit au niveau du module 120 et plus spécialement au niveau de l'antenne 121. Il en résulte une diminution notable du rapport signal à bruit, surtout sensible en réception.

Aussi, afin de remédier à cet inconvénient, il est prévu, conformément à la figure 2b, que le module 120 de réception-radio du terminal 10 comporte des moyens 128 de stockage des messages binaires élaborés par le microprocesseur 111 de l'unité centrale 110. Dans l'exemple de la figure 2b, lesdits moyens de stockage sont constitués par une mémoire-tampon 128 du type à accès aléatoire (RAM). Au fur et à mesure qu'il reçoit les messages du microprocesseur 111, le microprocesseur 122 du module 120 les stocke jusqu'au dernier dans la mémoire-tampon 128. Puis, le microprocesseur 111 de l'unité centrale 110 est mis en mode-sommeil par des moyens purement logiciels, tels qu'une instruction HALT dans le programme exécuté par le microprocesseur 111.

En mode-sommeil , le microprocesseur 111 n'a plus aucune activité. Il est alors possible pour le module 120 d'émission-réception radio d'émettre dans les meilleures conditions les messages binaires stockés dans la mémoire-tampon 128 vers la base fixe 20.

Après émission des messages, le microprocesseur 111 est à nouveau mis en mode-réveil, soit par réception d'une réponse d'acquittement ou de non-acquittement en provenance de la base 20, soit au bout d'une durée d'attente donnée si la communication n'a pas abouti suite à une mauvaise réception de la base par exemple. Cette durée, réalisée par l'horodateur 115 de l'unité centrale 110, est au moins égale au temps de transmission d'un message élémentaire, à savoir la somme de temps d'initialisation du module 120, du temps d'émission du message et du temps d'attente de la réponse d'acquittement ou non-acquittement de la base fixe 20, soit au total une durée de l'ordre de 100 à 150 ms.

En résumé, la séquence d'émission des données s'effectue de la façon suivante :
- stockage des messages binaires de l'unité centrale 110 dans la mémoire-tampon 128 du module 120 d'émission-réception radio,
- mise en mode-sommeil de l'unité centrale 110,
- émission des messages du module 120 vers la base 20,
- réveil de l'unité centrale 110 suite à une réponse de la base 20 ou après la durée d'attente.

De même, la séquence de réception des messages est la suivante :
- mise en mode-sommeil de l'unité centrale 110,
- réception des messages binaires de la baxe fixe 20 vers le module 120,
- réveil de l'unité centrale 110 après réception de la totalité des messages dont la taille est fixée, soit par une valeur maximale prédéfinie (40 octets par exemple), soit par une durée d'attente indiquant la fin des messages, par exemple 3ms après réception du dernier bit.

On a représenté sur la figure 2b la mémoire-tampon 128 sous forme d'un composant discret associé au microprocesseur 122. Notons cependant qu'elle pourrait également être intégrée audit microprocesseur.

Le fonctionnement en deux temps du système de l'invention, stockage puis émission, a pour conséquence le doublement théorique du temps de communication entre le terminal 10 portable et la base fixe 20. De manière à minimiser cette augmentation, il y a avantage à stocker les messages dans la mémoire-tampon 128 à une vitesse de transmission supérieure à la vitesse de transmission de la liaison radio entre le terminal 10 de paiement portable et la base fixe 20.

A titre d'exemple, au lieu d'utiliser une vitesse de 9600 bauds pour la transmission des messages de l'unité centrale 110 vers le module 120 et la même vitesse pour la liaison radio module 120-base 20, on peut utiliser une vitesse quatre fois supérieure de 38400 bauds par la transmission unité centrale 110-module 120, ceci étant possible du fait que la liaison unité centrale-module est fiabilisée. L'unité centrale peut alors lire ou écrire un bloc de 40 octets en 10ms au lieu de 40ms.

On remarquera que du fait de la présence d'une carte 11 à mémoire électronique, il est nécessaire de laisser fonctionner l'horloge 112 en permanence. Cependant, le bruit généré par l'horloge seule n'a que peu d'incidence sur l'émission et la réception radio. De plus, cela permet un réveil plus rapide de l'unité centrale 110 dès la réception des données.

## Revendications

1. Système d'échange de données entre un terminal (10) de paiement portable et une base (20) fixe reliée à un centre (30) de paiement, ledit terminal (10) et ladite base (20) comportant, chacun, une unité centrale (110, 210) et un module (120, 220) d'émission-réception radio, chaque unité centrale étant apte à composer, respectivement lire, des messages binaires émis, respectivement reçus, sous forme d'onde radio par ledit module d'émission-réception, caractérisé en ce que au moins le terminal (10) de paiement portable ou la base (20) fixe comporte des moyens (128) de stockage desdits messages binaires et des moyens (HALT) de mise en mode-sommeil de l'unité centrale (110), le module d'émission-réception radio n'étant mis en oeuvre que lorsque ladite unité centrale est en mode-sommeil.

2. Système selon la revendication 1, caractérisé en ce que lesdits messages binaires sont stockés dans lesdits moyens (128) de stockage à un vitesse de transmission supérieure à la vitesse de transmission de la liaison radio entre le terminal (10) de paiement portable et la base (20) fixe.
